# NOUVEAU FASCICULE DE BREVET EUROPEEN

(11) **EP 2 454 110 B2**
(45) Date de publication et mention de la décision concernant l'opposition: **17.02.2021**
(45) Mention de la délivrance du brevet: 05.06.2013
(21) Numéro de dépôt: 10745313.6
(22) Date de dépôt: 24.06.2010
(51) Int. Cl.: B60J 7/00, B60Q 3/02

(54) **DISPOSITIF D'OCCULTATION D'UN PAVILLON DE VÉHICULE À GUIDE(S) DE LUMIÈRE INTÉGRÉ(S)**
MIT INTEGRIERTER BELEUCHTUNG VERSEHENE FÜHRUNGEN FÜR EINE BESCHATTUNGSVORRICHTUNG IN EINEM FAHRZEUGDACH,
BLIND DEVICE HAVING BUILT-IN LIGHT GUIDE(S) FOR A VEHICLE ROOF

(30) Priorité: 15.07.2009 FR 0954878
(43) Date de publication de la demande: 23.05.2012
(73) Titulaire: PSA Automobiles SA, 78300 Poissy (FR)
(72) Inventeur: KARATCHENTZEFF, Jean-Loup, F-78330 Fontenay Le Fleury (FR); LEMAINE, Julien, 77310 Fargeau Ponthierry (FR)
(86) Numéro de dépôt international: PCT/FR2010/051290
(87) Numéro de publication internationale: WO 2011/007070

(56) Documents cités:
- EP-A1- 1 277 616
- EP-A1- 1 852 312
- EP-A2- 1 903 359
- WO-A1-02/085656
- WO-A1-2007/003663
- WO-A1-2008/022007
- WO-A1-2008/126456
- WO-A1-2008/126456
- DE-A1- 10 033 774
- DE-A1- 10 033 775
- DE-A1- 10 204 359
- DE-A1- 10 313 068
- DE-A1- 19 850 371
- DE-A1- 19 921 968
- FR-A1- 2 874 543

## Description

L'invention concerne les dispositifs qui sont destinés à occulter au moins partiellement les pavillons (ou toits) de certains véhicules, éventuellement de type automobile.

Comme le sait l'homme de l'art, certains véhicules, notamment de type automobile, comportent un pavillon (ou toit) qui est au moins partiellement transparent. C'est notamment le cas des toits ouvrants et des toits panoramiques (parfois appelés « cielos »). Les zones transparentes de ces pavillons sont généralement implantées en position centrale, et donc interdisent l'implantation de sources de lumière centrales (ou plafonniers) destinées à éclairer la partie supérieure du véhicule. En outre, certains pavillons sont parfois équipés d'un dispositif qui est destiné à occulter une partie au moins de leur(s) zone(s) transparente(s) et donc rend encore plus difficile l'implantation de source(s) de lumière dans la partie supérieure du véhicule.

L'invention a donc pour but de remédier aux inconvénients précités.

Elle propose à cet effet un dispositif d'occultation conforme à la revendication 1..

Le dispositif d'occultation selon l'invention peut comporter d'autres caractéristiques qui peuvent être prises séparément ou en combinaison, et notamment :
- chaque second logement latéral peut être continûment ouvert de sorte que le guide de lumière puisse diffuser continûment de la lumière dans la partie supérieure du véhicule ;
- chaque second logement latéral peut s'étendre sur une longueur qui est sensiblement identique à celle du premier logement latéral de son moyen de coulissement ;
- chaque second logement latéral peut être sensiblement parallèle au premier logement latéral de son moyen de coulissement ;
- chaque guide de lumière peut être « chaussé » à l'intérieur de son second logement latéral ;
   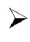 la forme de la section transversale choisie peut être choisie parmi (au moins) un rectangle, un carré, un hexagone, une forme au moins partiellement ovoïde et une forme de goutte d'eau ;
- chaque moyen de coulissement peut comprendre un second logement latéral;
- chaque extrémité de chaque guide de lumière peut être couplée à une source de lumière ;
- chaque source de lumière peut être une diode électroluminescente ;
- chaque moyen de coulissement peut comprendre des moyens de dissipation de chaleur au niveau de chaque source de lumière ;
- chaque second logement latéral peut être éventuellement délimité par des parois dont l'une comprend une partie latérale d'extrémité qui est agencée de manière à recevoir un élément de finition qui est recouvert au moins partiellement d'un revêtement choisi ;
- son élément d'occultation peut être un rideau ou une toile ;
- ses moyens de coulissement peuvent être agencés de manière à être solidarisés au pavillon.

L'invention propose également un véhicule, éventuellement de type automobile, et comprenant un pavillon ainsi qu'un dispositif d'occultation du type de celui présenté ci-avant.

D'autres caractéristiques et avantages de l'invention apparaîtront à l'examen de la description détaillée ci-après, et des dessins annexés, sur lesquels :
- la figure 1 illustre schématiquement, dans une vue en coupe partielle dans un plan transversal, perpendiculaire à la direction longitudinale d'un véhicule, une partie latérale d'un pavillon équipée d'un exemple de réalisation de moyen de coulissement d'un dispositif d'occultation selon l'invention, avec l'élément d'occultation non déployé, et
- la figure 2 illustre schématiquement, dans une vue en coupe partielle dans le plan transversal, la partie latérale du pavillon de la figure 1 avec l'élément d'occultation déployé.

Les dessins annexés pourront non seulement servir à compléter l'invention, mais aussi contribuer à sa définition, le cas échéant.

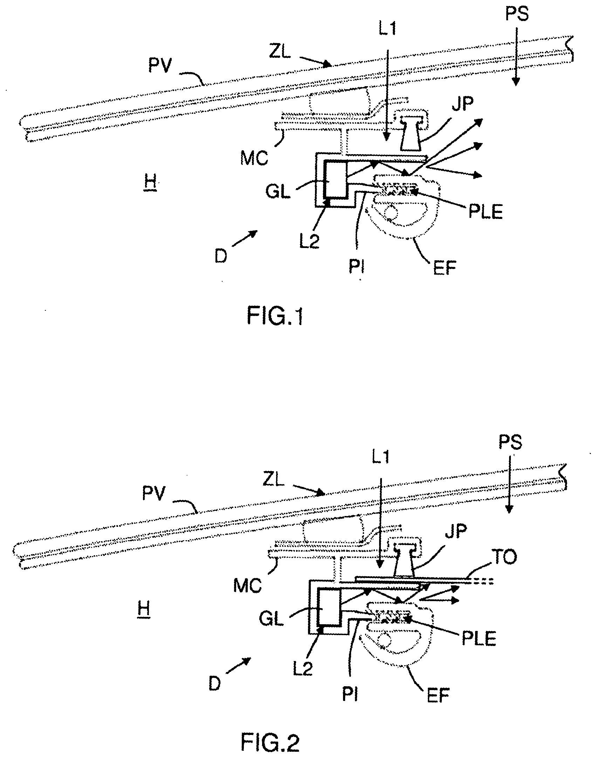

On a schématiquement représenté sur les figures 1 et 2 une partie d'un exemple de réalisation, non limitatif, d'un dispositif d'occultation D selon l'invention, fixé sur la face interne d'un pavillon (ou toit) PV de véhicule comportant au moins une zone transparente.

On notera que dans une variante le dispositif d'occultation D selon l'invention pourrait être fixé sur la partie supérieure de la structure du véhicule et non sur son pavillon (ou toit) PV.

On entend ici par « face interne du pavillon » la face qui est orientée vers l'intérieur de l'habitacle H, par opposition avec la face externe du pavillon PV qui est orientée vers l'extérieur de l'habitacle H.

On considère dans ce qui suit, à titre d'exemple non limitatif, que le véhicule est de type automobile, comme par exemple une voiture. Mais, l'invention n'est pas limitée à ce type de véhicule. Elle concerne en effet tout type de véhicule comportant un pavillon ou toit comprenant au moins une zone transparente qui peut être au moins partiellement occultée par un dispositif d'occultation D selon l'invention.

Par ailleurs, on considère dans ce qui suit, à titre d'exemple non limitatif, que le pavillon PV est de type panoramique (ou cielo). Mais, il pourrait également s'agir d'un toit ouvrant, par exemple.

Un dispositif d'occultation D, selon l'invention, comprend notamment deux moyens de coulissement MC qui sont destinés à être installés sensiblement parallèlement dans deux zones latérales supérieures ZL du véhicule. Les zones latérales ZL sont ici sensiblement parallèles à la direction longitudinale du véhicule (c'est-à-dire la direction suivant laquelle sa dimension est la plus importante). On entend donc ici par « latéral » une partie ou zone qui s'étend parallèlement à la direction longitudinale du véhicule.

Dans l'exemple non limitatif illustré, les deux moyens de coulissement MC sont installés sur les zones latérales ZL du pavillon PV. Mais, ils pourraient être installés sur une partie supérieure de la structure (ou caisse) du véhicule. On notera que sur les figures 1 et 2, seul l'un des deux moyens de coulissement MC est représenté pour une question de place. L'autre moyen de coulissement MC du dispositif D, non représenté, est sensiblement identique, à une symétrie miroir près, à celui qui est représenté.

Chaque moyen de coulissement MC peut par exemple se présenter sous la forme d'un profilé (obtenu par moulage et/ou extrusion) dans lequel est défini un premier logement latéral L1 qui est continûment ouvert (du côté qui est orienté vers l'autre moyen de coulissement MC) et qui est agencé de manière à permettre le coulissement d'un bord latéral d'un élément d'occultation TO du dispositif D. Chaque profilé peut par exemple être réalisé en métal (par exemple en aluminium) extrudé ou bien en matière plastique moulée (ou injectée).

Chaque premier logement latéral L1 présente par exemple une forme générale parallélépipédique rectangle ou carrée.

L'élément d'occultation TO peut par exemple être un rideau ou une toile qui est au moins partiellement occultant(e). Il comprend deux bords transversaux opposés, sensiblement perpendiculaires à ses bords latéraux (ou longitudinaux) et qui pour l'un d'entre eux est par exemple solidarisé à un axe d'enroulement (non représenté) monté sous une force de rappel élastique, tandis que l'autre est par exemple connecté à une sangle ou un câble d'entraînement destiné à être actionné par un usager. L'axe d'enroulement et le mécanisme d'entraînement peuvent faire partie du dispositif D. Mais, cela n'est pas obligatoire.

Comme illustré non limitativement, chaque moyen de coulissement MC peut par exemple comporter un joint JP au niveau de la face ouverte de son premier logement L1, de manière à plaquer l'élément d'occultation TO contre la paroi qui délimite la face inférieure dudit premier logement L1, et ainsi offrir un bon rendu visuel pour les passagers.

Selon l'invention, l'un au moins des deux moyens de coulissement MC comprend également au moins un second logement latéral L2 qui, d'une première part, est ouvert du côté qui est orienté vers l'autre moyen de coulissement MC, d'une deuxième part, est placé en dessous du premier logement L1, et d'une troisième part, loge au moins un guide de lumière GL.

Par exemple, chaque guide de lumière GL est « chaussé » (ou inséré) à l'intérieur de son second logement latéral L2.

De préférence, chaque moyen de coulissement MC comprend au moins un second logement latéral L2 de manière à offrir un éclairage sensiblement homogène dans la zone de la partie supérieure PS de l'habitacle H qui est située entre les deux moyens de coulissement MC.

On notera également que, dans le but d'améliorer encore plus l'homogénéité de l'éclairage, chaque extrémité de chaque guide de lumière GL peut être couplée à une source de lumière.

A titre d'exemple non limitatif, chaque source de lumière peut par exemple être une diode électroluminescente (ou LED), émettant éventuellement une lumière de couleur (autre que blanche).

Chaque guide de lumière GL comprend deux extrémités opposées dont l'une au moins est couplée à une source de lumière de manière à diffuser de la lumière dans une partie supérieure PS du véhicule. On comprendra que la lumière qui est émise par chaque source de lumière pénètre par une extrémité d'un guide de lumière GL, se propage dans ce dernier et ressort, en partie par réflexions internes, sur le côté longitudinal (ou latéral) qui est situé du côté de la face ouverte du second logement L2. Par conséquent, et comme cela est matérialisé par les flèches sur les figures 1 et 2, la lumière est diffusée vers la partie centrale supérieure de l'habitacle H.

Lorsque l'élément occultant TO n'est pas déployé au niveau d'une partie du pavillon PV, comme c'est le cas dans l'exemple de la figure 1, la lumière peut diffuser localement vers la face interne dudit pavillon PV, puisqu'elle n'est pas localement interceptée par l'élément occultant TO. En revanche, lorsque l'élément occultant TO est déployé au niveau d'une partie du pavillon PV, comme c'est le cas dans l'exemple de la figure 2, la lumière ne peut diffuser localement que jusqu'à la face interne de l'élément occultant TO, puisqu'elle est localement interceptée par ce dernier (TO).

On notera que chaque second logement latéral L2 peut par exemple être continûment ouvert du côté qui est orienté vers le moyen de coulissement MC auquel il n'appartient pas afin que le guide de lumière GL puisse diffuser continûment de la lumière dans la partie supérieure PS du véhicule. Mais, on pourrait également envisager que chaque second logement latéral L2 ne soit ouvert qu'à quelques endroits, du côté qui est orienté vers le moyen de coulissement MC auquel il n'appartient pas, afin que le guide de lumière GL diffuse de la lumière de façon discontinue dans la partie supérieure PS du véhicule. Le caractère discontinu peut être recherché ou imposé par d'éventuelles contraintes de fabrication (comme par exemple des découpes et/ou des injections).

On notera également que chaque second logement latéral L2 peut par exemple s'étendre suivant la direction longitudinale (ou latérale) sur une longueur qui est sensiblement identique à celle du premier logement latéral L1 de son moyen de coulissement MC. Mais, cela n'est pas obligatoire. En effet, l'un au moins des moyens de coulissement MC pourrait comporter un seul second logement latéral L2 présentant une extension longitudinale (ou latérale) strictement inférieure à celle du premier logement latéral L1 correspondant, ou bien plusieurs (au moins deux) seconds logements latéraux L2 présentant une extension longitudinale (ou latérale) au plus égale à la moitié de celle du premier logement latéral L1 correspondant et logeant chacun un guide de lumière GL.

On notera également que chaque second logement latéral L2 peut être sensiblement parallèle au premier logement latéral L1 de son moyen de coulissement MC. Mais, cela n'est pas obligatoire. En effet, on peut envisager qu'un second logement latéral L2 présente une forme curviligne de manière à permettre un effet de style lumineux.

On notera également que chaque guide de lumière GL peut présenter des facettes internes destinées à favoriser les réflexions transversales de la lumière vers le centre de la partie supérieure PS de l'habitacle H lorsqu'il est sensiblement installé dans son second logement latéral L2 dans une position prédéfinie. Dans ce cas, il est avantageux d'empêcher la rotation du guide de lumière GL dans son second logement latéral L2. Pour ce faire, et comme illustré non limitativement, chaque second logement latéral L2 peut présenter une section transversale de forme choisie (c'est-à-dire anti-rotative), et chaque guide de lumière GL peut présenter une section transversale sensiblement identique à cette forme choisie.

Par exemple, et comme illustré non limitativement, cette forme peut être rectangulaire. Mais, dans des variantes, elle pourrait être carrée, ou hexagonale, ou au moins partiellement ovoïde ou encore de type « goutte d'eau », par exemple. Plus généralement, elle peut présenter toute forme géométrique qui n'est pas une forme de révolution.

On notera également que chaque moyen de coulissement MC peut éventuellement comprendre des moyens de dissipation de chaleur (non représentés) au niveau de chaque source de lumière. Cela permet avantageusement d'évacuer dans l'habitacle H la chaleur qui est produite par une source de lumière en fonctionnement, et ainsi d'éviter qu'elle ne surchauffe et donc qu'elle ne vieillisse de façon accélérée. Ces moyens de dissipation de chaleur peuvent par exemple se présenter sous la forme de petits radiateurs à ailettes.

Enfin, et comme illustré non limitativement sur les figures 1 et 2, chaque second logement latéral L2 peut être délimité par des parois dont l'une PI comprend une partie latérale d'extrémité PLE qui est agencée de manière à recevoir éventuellement un élément de finition (parfois appelé jonc de finition) EF qui est recouvert au moins partiellement d'un revêtement choisi (comme par exemple un tissu similaire au garnissage périphérique du pavillon PV).

L'invention ne se limite pas aux modes de réalisation de dispositif d'occultation et de véhicule décrits ci-avant, seulement à titre d'exemple, mais elle englobe toutes les variantes que pourra envisager l'homme de l'art dans le cadre des revendications ci-après.

## Revendications

1. Dispositif (D) d'occultation d'une partie au moins d'un pavillon (PV) de véhicule, comprenant deux moyens de coulissement (MC) propres à être installés sensiblement parallèlement dans deux zones latérales supérieures (ZL) du véhicule et comprenant chacun un premier logement latéral (L1) continûment ouvert et agencé de manière à permettre le coulissement d'un bord latéral d'un élément d'occultation (TO), **caractérisé en ce que** l'un au moins desdits moyens de coulissement (MC) comprend en outre au moins un second logement latéral (L2) ouvert, placé en dessous dudit premier logement (L1) et logeant au moins un guide de lumière (GL) dont l'une au moins de deux extrémités opposées est couplée à une source de lumière de manière à diffuser de la lumière dans une partie supérieure du véhicule, et **en ce que** chaque second logement latéral (L2) présente une section transversale de forme choisie, et chaque guide de lumière (GL) présente une section transversale sensiblement identique à ladite forme choisie, cette dernière étant choisie de manière à empêcher la rotation du guide de lumière (GL) dans son second logement latéral (L2).

2. Dispositif selon la revendication 1, **caractérisé en ce que** chaque second logement latéral (L2) est continûment ouvert de sorte que ledit guide de lumière (GL) puisse diffuser continûment de la lumière dans ladite partie supérieure du véhicule.

3. Dispositif selon l'une des revendications 1 et 2, **caractérisé en ce que** chaque second logement latéral (L2) s'étend sur une longueur qui est sensiblement identique à celle du premier logement latéral (L1) de son moyen de coulissement (MC).

4. Dispositif selon l'une des revendications 1 à 3, **caractérisé en ce que** chaque second logement latéral (L2) est sensiblement parallèle au premier logement latéral (L1) de son moyen de coulissement (MC).

5. Dispositif selon l'une des revendications 1 à 4, **caractérisé en ce que** chaque guide de lumière (GL) est « chaussé » à l'intérieur de son second logement latéral (L2).

6. Dispositif selon l'une des revendications 1 à 5, **caractérisé en ce que** la forme de la section transversale de chaque second logement latéral (L2) est choisie dans un groupe comprenant au moins un rectangle, un carré, un hexagone, une forme au moins partiellement ovoïde et une forme de goutte d'eau.

7. Dispositif selon l'une des revendications 1 à 6, **caractérisé en ce que** chaque moyen de coulissement (MC) comprend un second logement latéral (L2).

8. Dispositif selon l'une des revendications 1 à 7, **caractérisé en ce que** chaque extrémité de chaque guide de lumière (GL) est couplée à une source de lumière.

9. Dispositif selon l'une des revendications 1 à 8, **caractérisé en ce que** chaque source de lumière est une diode électroluminescente.

10. Dispositif selon l'une des revendications 1 à 9, **caractérisé en ce que** chaque moyen de coulissement (MC) comprend des moyens de dissipation de chaleur au niveau de chaque source de lumière.

11. Dispositif selon l'une des revendications 1 à 10, **caractérisé en ce que** chaque second logement latéral (L2) est délimité par des parois dont l'une (PI) comprend une partie latérale d'extrémité (PLE) agencée de manière à recevoir un élément de finition (EF) recouvert au moins partiellement d'un revêtement choisi.

12. Dispositif selon l'une des revendications 1 à 11, **caractérisé en ce que** lesdits moyens de coulissement (MC) sont agencés de manière à être solidarisés audit pavillon (PV).

13. Véhicule comprenant un pavillon (PV), **caractérisé en ce qu'**il comprend un dispositif d'occultation (D) selon l'une des revendications précédentes.

14. Véhicule selon la revendication 13, **caractérisé en ce qu'**il est de type automobile.

## Patentansprüche

1. Vorrichtung (D) zur Bedeckung zumindest eines Teils eines Fahrzeugdaches (PV), umfassend zwei Gleitvorrichtungen (MC), die sich dazu eignen, in etwa parallel in zwei seitlichen oberen Bereichen (ZL) des Fahrzeugs installiert zu werden, und umfassend jeweils eine erste seitliche Aufnahme (L1), die durchgehend offen, und so angeordnet ist, dass sie das Verschieben eines seitlichen Randes eines Bedeckungselements (TO) ermöglicht, **dadurch gekennzeichnet, dass** zumindest die eine der besagten Gleitvorrichtungen (MC) darüber hinaus zumindest eine zweite offene seitliche Aufnahme (L2) umfasst, die unterhalb der besagten ersten Aufnahme (L1) angeordnet ist, und zumindest einen Lichtwellenleiter (GL) aufnimmt, von dem zumindest das eine der beiden gegenüber liegenden Enden so an eine Lichtquelle gekoppelt ist, dass in einem oberen Teil des Fahrzeugs Licht ausgestrahlt wird und **dadurch gekennzeichnet, dass** jede zweite seitliche Aufnahme (L2) einen Querschnitt in einer ausgewählten Form umfasst, und jeder Lichtwellenleiter (GL) einen Querschnitt aufweist, der in etwa gleich der ausgewählten Form ist, und letztere so ausgewählt wird, dass sie das Verdrehen des Lichtwellenleiters (GL) in seiner zweiten seitlichen Aufnahme (L2) verhindert.

2. Vorrichtung nach Anspruch 1, **dadurch gekennzeichnet, dass** jede zweite seitliche Aufnahme (L2) durchgehend offen ist, sodass der besagte Lichtwellenleiter (GL) durchgehend Licht in den besagten oberen Teil des Fahrzeugs ausstrahlen kann.

3. Vorrichtung nach einem der Ansprüche 1 und 2, **dadurch gekennzeichnet, dass** sich jede zweite seitliche Aufnahme (L2) über eine Länge erstreckt, die in etwa gleich jener der ersten seitlichen Aufnahme (L1) ihrer Gleitvorrichtung (MC) ist.

4. Vorrichtung nach einem der Ansprüche 1 bis 3, **dadurch gekennzeichnet, dass** jede zweite seitliche Aufnahme (L2) in etwa parallel zur ersten seitlichen Aufnahme (L1) ihrer Gleitvorrichtung (MC) verläuft.

5. Vorrichtung nach einem der Ansprüche 1 bis 4, **dadurch gekennzeichnet, dass** jeder Lichtwellenleiter (GL) im Inneren seiner zweiten seitlichen Aufnahme (L2) "anliegt".

6. Vorrichtung nach Anspruch 5, **dadurch gekennzeichnet, dass** die Form aus einer Gruppe ausgewählt wird, die zumindest ein Rechteck, ein Quadrat, ein Sechseck, eine zumindest teilweise ovale Form und eine Wassertropfenform umfasst.

7. Vorrichtung nach einem der Ansprüche 1 bis 6, **dadurch gekennzeichnet, dass** jede Gleitvorrichtung (MC) eine zweite seitliche Aufnahme (L2) umfasst.

8. Vorrichtung nach einem der Ansprüche 1 bis 7, **dadurch gekennzeichnet, dass** jedes Ende eines jeden Lichtwellenleiters (GL) an eine Lichtquelle gekoppelt ist.

9. Vorrichtung nach einem der Ansprüche 1 bis 8, **dadurch gekennzeichnet, dass** jede Lichtquelle eine Leuchtdiode ist.

10. Vorrichtung nach einem der Ansprüche 1 bis 9, **dadurch gekennzeichnet, dass** jede Gleitvorrichtung (MC) Vorrichtungen zum Ableiten der Hitze im Bereich jeder Lichtquelle umfasst.

11. Vorrichtung nach einem der Ansprüche 1 bis 10, **dadurch gekennzeichnet, dass** jede zweite seitliche Aufnahme (L2) durch Wände eingegrenzt wird, von denen eine (PI) einen seitlichen Endabschnitt (PLE) umfasst, der so angeordnet ist, dass er ein Abschlussstück (EF) aufnimmt, das zumindest teilweise mit einem ausgewählten Belag bedeckt ist.

12. Vorrichtung nach einem der Ansprüche 1 bis 11, **dadurch gekennzeichnet, dass** die besagten Gleitvorrichtungen (MC) so angeordnet sind, dass sie fest mit dem besagten Dach (PV) verbunden sind.

13. Fahrzeug umfassend ein Dach (PV), **dadurch gekennzeichnet, dass** es eine Bedeckungsvorrichtung (D) nach einem der vorherigen Ansprüche umfasst.

14. Fahrzeug nach Anspruch 13, **dadurch gekennzeichnet, dass** es ein Kraftfahrzeug ist.

## Claims

1. Device (D) for blinding at least a portion of a vehicle roof (PV), comprising two sliding means (MC) able to be installed substantially parallel in two top side areas (ZL) of the vehicle and each comprising a first continuously open side recess (L1) and arranged in such a way as to allow for the sliding of a side edge of a blind element (TO), **characterised in that** at least one of said sliding means (MC) further comprises at least one second open side recess (L2), placed below said first recess (L1) and housing at least one light guide (GL) of which at least one of the two opposite ends is coupled to a light source in such a way as to spread the light into an upper portion of the vehicle, and **in that** each second side recess (L2) has a transverse section of a chosen shape, and each light guide (GL) has a transverse section substantially identical to said chosen shape, with the latter chosen in such a way as to prevent the rotation of the light guide (GL) in its second side recess (L2).

2. Device according to claim 1, **characterised in that** each second side recess (L2) is continuously open is such a way that said light guide (GL) can continuously spread the light into said upper portion of the vehicle.

3. Device according to one of claims 1 and 2, **characterised in that** each second side recess (L2) extends over a length which is substantially identical to that of the first side recess (L1) of its sliding means (MC).

4. Device according to one of claims 1 to 3, **characterised in that** each second side recess (L2) is substantially parallel to the first side recess (L1) of its sliding means (MC).

5. Device according to one of claims 1 to 4, **characterised in that** each light guide (GL) is "fitted" inside its second side recess (L2).

6. Device according to one of claims 1 to 5, **characterised in that** said shape is chosen from a group comprising at least one rectangle, a square, a hexagon, a shape at least partially ovoid and a water drop shape.

7. Device according to one of claims 1 to 6, **characterised in that** each sliding means (MC) comprises a second side recess (L2).

8. Device according to one of claims 1 to 7, **characterised in that** each end of each light guide (GL) is coupled to a light source.

9. Device according to one of claims 1 to 8, **characterised in that** each light source is a light-emitting diode.

10. Device according to one of claims 1 to 9, **characterised in that** each sliding means (MC) comprises means for dissipating heat on each light source.

11. Device according to one of claims 1 to 10, **characterised in that** each second side recess (L2) is delimited by walls of which one (PI) comprises an end side portion (PLE) arranged in such a way as to receive a finishing element (EF) covered at least partially with a chosen covering.

12. Device according to one of claims 1 to 11, **characterised in that** said sliding means (MC) are arranged in such a way as to be made integral with said roof (PV).

13. Vehicle comprising a roof (PV), **characterised in that** it comprises a device for blinding (D) according to one of the preceding claims.

14. Vehicle according to claim 13, **characterised in that** it is of the automobile type.
